# EUROPEAN PATENT APPLICATION

(11) **EP 1 464 620 A1**
(43) Date of publication of application: **06.10.2004**
(21) Application number: 03701045.1
(22) Date of filing: 09.01.2003
(51) Int. Cl.: C01B 31/02, C09C 1/56, H01M 4/96, H01M 4/88, H01M 8/02, H01M 8/10

(54) **CARBONACEOUS MATERIAL AND DISPERSION CONTAINING THE SAME**

(30) Priority: 11.01.2002 JP 2002005370; 11.01.2002 JP 2002005381; 21.11.2002 JP 2002337400
(71) Applicant: MIKUNI SHIKISO KABUSHIKI KAISHA, Himeji-shi, Hyogo-ken (JP)
(72) Inventor: KADOWAKI, T. c/o MIKUNI SHIKISO KABUSHIKI KAISHA, Himeji-shi, Hyogo-ken (JP); KURODA, Kouji c/o MIKUNI SHIKISO KABUSHIKI KAISHA, Himeji-shi, Hyogo-ken (JP); TAKAHAMA, Junichi MIKUNI SHIKISO KABUSHIKI KAISHA, Himeji-shi, Hyogo-ken (JP); HISASHI, Hideyuki MIKUNI SHIKISO KABUSHIKI KAISHA, Himeji-shi, Hyogo-ken (JP)
(74) Representative: Hartz, Nikolai F., Dr.
(86) International application number: PCT/JP2003/000133
(87) International publication number: WO 2003/059812

(57) **Abstract**

A water repellent carbonaceous material obtained by contacting a carbonaceous material with a water repellent material in a melted state.

## Description

### Technical field

The present invention relates to a carbonaceous material having both electrical conductivity and water repellency, a gas diffusion layer, a catalyst layer and a separator, for an electrode of fuel cells such as proton-exchange membrane fuel cell, phosphoric acid fuel cell and the like, utilizing the said carbonaceous material, and a production thereof.

### Background art

Heretofore, a fuel cell is known as an apparatus for converting chemical energy directly into electric energy. The fuel cell is generally, an apparatus structured in which a pair of electrode using a porous material, namely a fuel electrode (anode) and an oxidizer electrode(cathode) interpose therebetween an electrolyte layer maintaining an electrolyte; and by contacting a fuel gas as a reactive gas to the back side of the fuel electrode, utilizing the electrochemical reaction occurring thereby, the electric energy is drawn from between the above described electrodes.

The fuel electrode has a structure in which a catalyst pulling out an electron from hydrogen, a gas diffusion layer of hydrogen as a fuel, and a separator as a collector, are layer-stacked.

The oxidizer electrode has a structure in which a catalyst of proton and oxygen, diffusion layer of air, and a separator, are layer-stacked. A solid polymer fuel cell using a solid polymer membrane (electrolytic membrane) which is sulfonic acid type proton conductive, is taken a hopeful view on practical applications under low temperature condition.

Here, to remove quickly the water generated by the reaction 1/2 O₂ + 2H+ + 2e⁻ → H₂O at the cathode, the electrode member is required to be imparted not only electroconductivity, but also water repellency. For example, as a method for producing the gas diffusion layer, a method is known in which an electroconductive material such as carbon black or graphite, and a fluorocarbon resin as a binder and as a repellent agent in one, are mixed, and are applied to a porous material such as carbon paper or carbon fiber body (Japanese patent application Kokai (laid-open) nos. hei.10-261421, 2001-43865). The catalyst layer is formed by carrying platinum, ruthenium on the surface of a carbonaceous material like carbon particles, and by mixing it with a binder resin and applying it on the electrolyte membrane, or by forming on the gas diffusion layer and hot pressing (Japanese patent application Kokai (laid-open) nos. hei.7-211324, hei.8-138683).

Also, a method is known in which a layer constituted of an electroconductive particle and a water repellent material such as tetrafluoroethylene is formed, then together with the polymer solid electrolyte is formed into a conjugated body (Japanese patent application Kokai(laid-open) no. hei.7-296818).

As a separator, those obtained by press molding of graphite sheet, a resin impregnated material obtained by impregnating resin to a sintered compact, glassified carbon, or those obtained by blending carbonaceous material such as carbon black or graphite to a thermosetting resin such as epoxy resin, have been known heretofore(Japanese patent application Kokai(laid-open) nos. sho.58-53167, sho.60-37670, sho.60-246568, 2000-239488).

However, by making a gas diffusion layer by the above described methods, if the amount of water repellent material is too large, the electric resistance increases, and the electroconductivity is not kept enough. On the other hand, if the amount of the water repellent material is too small, the obtained water repellency is not enough, and the gas penetration is impeded thus results to the drop of the cell performance.

The same thing can be said about the catalyst layer and the separator. In the case of the catalyst layer, when a large amount of water covers around of the catalyst, the catalyst performance drops. Also, the separator usually is equipped of a channel to flow the gas, and when the separator has poor water repellency, water sticks thereto and the gas flow channel is closed off, and at the same time, if the water generated at the border between the air electrode and the electrolyte is not taken off, the reaction at the air electrode at the location where the water hampers won't advance, and in consequence, it brings about the deterioration of performance of the cell.

To employ as a electroconductive material for a fuel cell, it has been such an attempt heretofore to water repellent finish an electroconductive material such as a carbonaceous material. For instance, Japanese patent application Kokai(laid-open) no.2000-239704 describes that, an electroconductive material such as carbon black, carbon paper, graphite, nickel powder, or sponge-like titanium, in the presence of ethanol, is mixed with various kinds of silane-coupling agent, or after being dispersed into cyclic silicone oil, is mixed with various kinds of silane-coupling agent, and is water repellent finished. Then, the obtained treated material is considered to be a chemical adsorption monomolecular film, by means of change in weight and by means of infrared adsorption spectrum obtained by diffusion reflection method.

Also, in Japanese patent application Kokai (laid-open) no. hei.6-256008, it is described that, carbon particle was reacted with fluorine for 1 minute to 6 hours at 350 to 600 °C, and a fluorinated carbon particle was obtained, and that it is to be used as a material for fuel cell.

However, by means of the method described in Japanese Patent Application Laid-Open no.2000-239704, a carbonaceous material like carbon black is water repellent treated after being dispersed in alcohol or liquid silicone, but because carbon black is a material having an extreme tendency to coagulate, to water repellent finish each one of carbon black particles is beyond question but to water repellent finish in a relatively finely dispersed state itself is extremely difficult. Even the fluorinated silane compound film is coated in a unimolecular state, if the carbon black itself is in a coagulated state, it is not possible to treat it uniformly. Also, by this method, a water repellent material is limited to such a specific material as silane coupling agent having functional group such as alkoxi-group, which is able to react with the functional group on the surface of carbon black.

On the other hand, by the method described in Japanese patent application Kokai(laid-open) no.hei.6-256008, the contact of carbon particle such as meso-carbon, micro-beads or thermal black, with fluorine is conducted in a reactor, in a state that the carbon particle is put in a nickel boat, but again, the material able to be used as a water repellent is limited to those which are able to be circulated in the reactor and to be contacted with the carbon particle in the boat, such as a gas or a material able to be gasified at a relatively low temperature, thus the alternative is extremely narrow.

Also, in the manufacturing process of a fuel cell, there is a baking process at 400°C during the casting of the gas diffusion layer, and because of decomposition and sublimation of the water repellent material, water repellency was largely degraded. Also, the operating temperature of the fuel cell is from 70 to 80°C, hence, long time water repellency at this temperature is required, but by means of the above described conventional methods, heat resistance of the water repellent material is low and leads to deterioration of performance over time.

It is an object of the present invention to provide an electroconductive material for fuel cell of which water repellency for a long duration of time and electroconductivity are compatible, with as little as possible of water repellent material.

The inventors of the present invention have conducted intensive study to solve the above described problems. As a result, they have discovered that a carbonaceous material water repellent treated by a certain method satisfies properties of water repellency and electroconductivity required as a material for a fuel cell, and achieved the present invention.

### Description of the invention

Thus, the present invention resides in:
(1) A water repellent carbonaceous material obtained by contacting a carbonaceous material with a water repellent material in a melted state.
(2) A method for producing a water repellent carbonaceous material characterized in that a water repellent material in a melted state is contacted with a carbonaceous material.
(3) A carbonaceous material for a fuel cell obtained by dropping a water repellent material solved in an organic solvent to a water dispersion of a carbonaceous material.
(4) A method for producing a water repellent carbonaceous material characterized in that water repellent finish is conducted by dropping a water repellent material solved in an organic solvent to a water dispersion of a carbonaceous material.
(5) A carbonaceous material for fuel cell according to the above items (1) or (3), characterized in that the said carbonaceous material is at least one of carbon black, graphite and carbon fiber.
(6) A carbonaceous material for fuel cell according to the above items (1) or (3) characterized in that the said water repellent material is at least one of fluorocarbon resin, silicon resin, silane coupling agent and wax.
(7) A dispersion containing a water repellent carbonaceous material of the above items (1) to (6).
(8) A material for fuel cell obtained by supporting catalyst component on the water repellent carbonaceous material of the above items (1) to (6).
(9) An electrode for fuel cell containing a material for fuel cell of claim 8.
(10) A gas diffusion layer for fuel cell obtained by blending the water repellent carbonaceous material of the above items (1) to (6) with a binder resin and impregnating it to a porous material.
(11) A separator for fuel cell obtained by blending the water repellent carbonaceous material of the above items (1) to (6) with a binder resin, and shaping it.
(12) A method for producing a gas diffusion layer for fuel cell characterized in that the dispersion according to the above item (7) is blended with a binder resin, and impregnated to a porous material.
(13) A separator for fuel cell characterized in that the dispersion according to the above item (7) is blended with a thermosetting resin and is shaped.

Now, the present invention is described in detail below.

A carbonaceous material used in the present invention is not particularly limited as far as it is electroconductive. Preferably, material with high corrosion resistance and high electroconductivity such as, carbon black such as acetylene black, furnace black, channel black, ketchen black; graphite, activated carbon; carbon fiber; carbon nano tube, may be used. One or 2 or more kinds of these carbonaceous materials may be used.

Among these carbonaceous materials, it is especially preferable to use a conductive carbon black with high specific surface area and high structure. This is because it has an especially high electroconductivity, and at the same time the particle is fine enough so that to be dispersed in other components such as binder resin and give an uniform property, and also because it is advantageous when filled in the microscopic space of a porous material such as carbon paper.

Among the conductive carbon black, it is especially preferable to use a graphitized carbon black, obtained by heat-treating to grow crystallites, to obtain an even higher conductivity and excellent dispersibility to the matrix component such as a binder resin.

Specific surface area of the carbonaceous material is not limited, but usually it is selected from a range of from 10 to 1500m²/g, more preferably from 10 to 500m²/g, so that to be filled to the microscopic space and to secure the conductive surface. A particle size of the carbonaceous material is not limited either, but generally it is from 10 to 100nm, more preferably from 10 to 60nm as primary particle size.

### [Water repellent material]

As a water repellent material, any material able to water repellent finish the above described carbonaceous material may be used.

Especially, a material with high water repellency, for example, fluorocarbon resin such as PTFE(poly tetra fluoroethylene), FEP(fluorinated ethylene propylene copolymer), PFA(tetrafluoroethylene-perfluoroalkylvinyl ether copolymer), ETFE(ethylene tetrafluoroethylene copolymer), PCTFE(polychlorotrifluoroethylene), PVDF(polyfluoronated vinylidene), E-CTFE(trifluoronated chloroethylene-ethylene copolymer); silicon resin; silane-coupling agent; wax, may be used. Among these, fluorocarbon resin is especially preferable because of high water repellency. Among fluorocarbon resin, PTFE is the most preferable because of its especially high water repellency.

In the present invention, the above described carbonaceous material is water repellent finished by the water repellent material above described, and the water repellent finishing process here can be generally classified into two categories(the water repellent treatment 1 and the water repellent treatment 2).

### [Water repellent treatment 1]

The above described water repellent material is melted, and in this state the water repellent treatment is conducted by contacting said water repellent material with a carbonaceous material. The method is not limited, but for example the following method can be used. The carbonaceous material and the water repellent material are mixed and are heated to a high temperature. By heating, the water repellent material is melted, and is impregnated to the carbonaceous material. It is surmised that, because the water repellent material in the melted state is contacted with the carbonaceous material, a more uniform coating is obtained. Thus, it is considered that, even with smaller amount, high water repellency is obtained, therefore an electroconductive material with water repellency while maintaining electroconductivity, is obtained. Also, by the present invention, a water repellent material able to keep water repellency even at a high temperature, may be obtained.

Relating to the heating to melt the water repellent material, it is possible to obtain a more uniform coating by heating in a state that the carbonaceous material and the water repellent material are blended in advance in a dispersing medium, because in this way, the coating treatment of the carbonaceous material by the water repellent material can be accomplished in a state that the carbonaceous material and the water repellent material are in a more uniformly blended state. It is surmised that, because of that, more water repellent effect may be obtained with less amount of water repellent material. For the mixing process, it is preferable to disperse finely in advance the carbonaceous material in a dispersion medium. Specifically, using a dispersant if necessary, and by means of a dispersing machine such as dyno-mill for instance, the carbonaceous material is dispersed in more fine particles, so that by water repellent treatment afterwards the water repellent material may become more uniform, and at the same time the amount of the water repellent material to be used may be less. Here, a dispersant is preferably one with little amount of nonvolatile content. This is because by heating, the dispersant is removed, and the possibility of inhibition to the cell reaction caused by the remaining dispersant may be eliminated. It is preferable to select from the dispersants that may be used in the dispersion of the present invention, to be described later.

As a temperature of heating, it is necessary to be equal or higher than the melting point of the water repellent material. For instance, in the case of PTFE, it is no lower than 360°C. On the other hand, if the temperature is too high, there may be such a case that the water repellent material may evaporate or be decomposed, thus the water repellency is lost after the treatment. Therefore generally the temperature is from the melting point to the decomposition point.

The duration of time that a melted water repellent material and a carbonaceous material are contacted is not limited, but it is preferable that the contact between these materials is thoroughly conducted, so generally it is from 1 hour to 1 hour and 30 minutes. If the contacting time is too short the water repellent material may not adhere enough, on the other hand if the contacting time is too long, a part of the water repellent material may be decomposed and water repellency is lowered.

It is preferable to dry milling the carbonaceous material after the water repellent treatment. This is because an agglomeration occurs during the heat treatment. The milling method at this time is not limited, but it may be milled enough by means of a mixer, a jet-mill, for instance. Here, the level of milling is enough if it unravels the agglomerate occurred during the water repellent treatment.

The amount ratio of the carbonaceous material and the water repellent material may be selected according to the required water repellency, the degree of loss of the water repellent material by heating during the manufacturing process of the cell, and the like, but generally, to 100 parts by weight of carbonaceous material, water repellent material is from 1 to 50 parts by weight, especially preferably from 5 to 20 parts by weight. Especially in this range, the obtained water repellent carbonaceous material has an excellent balance between water repellency and electroconductivity. If the water repellent material is less than 1 part by weight to 100 parts by weight of the carbonaceous material, the obtained water repellency tends to be not enough. Especially by means of the above described water repellent treatment 1, there is no worry of losing water repellency during the baking process at the molding of the gas diffusion layer, thereby the amount of the water repellent material as binder and water repellent agent in one may be drastically lowered. Therefore the resistance of the gas diffusion layer may be dropped drastically, thus the performance of the cell is expected to be improved.

### [Water repellent treatment 2]

A carbonaceous material above described is surface treated with a water repellent material so that the water repellency is imparted. Water repellent treatment is conducted by means of a process so called flashing, namely, first preparing an aqueous dispersion of a carbonaceous material, then by dropping thereto an organic solvent dispersion of a water repellent material, thus transferring the carbonaceous material to the organic solvent phase. By means of such method, because a carbonaceous material with a small diameter which is difficult to disperse finely, is dispersed finely in advance in water, therefore it enables to treat it uniformly with water repellent material. Also, by selecting adequately an organic solvent, any water repellent material which is soluble or dispersible thereto may be employed, therefore selection of water repellent material is extended widely. Especially, by adding a material so called curing agent, namely a material having a function of advancing the polymerization of the water repellent material by a reaction such as cross-linking, water repellent performance may be even more improved. Here, a curing agent is not limited as far as it is suitable to the structure of the water repellent material, and for instance, amine, isocyanate, acid anhydride, peroxide, melamine, may be used. In the method of water repellent treatment 2, as an uniform treatment is available by selecting appropriately an organic solvent according to the water repellent material, so it is possible to use for instance a material such as tetrafluoroethylene(PTFE) which has no functional group which may react with the carbonaceous material, therefore an electrically conductive material imparted water repellent property while maintaining electrical conductivity may be prepared.

### [Use of a water repellent carbonaceous material]

As above described, by using a certain method to treat a carbonaceous material with a water repellent material to impart water repellency, a water repellent material of the present invention may be obtained. The water repellent carbonaceous material of the present invention may have well balanced electroconductivity and water repellency. By mixing to this water repellent carbonaceous material a water repellent agent to perform as a binder, water or an organic solvent, in a voluntary amount, and impregnating it to a porous material such as carbon paper, carbon fiber body, a gas diffusion layer of a fuel cell may be obtained.

An organic solvent and a water repellent agent to be used here are not particularly limited, and any of those used conventionally to produce a gas diffusion layer, may be used properly. More concretely, as a water repellent agent to perform as a binder, a fluorine resin for example is preferable in point of view of excellent water repellency and adherability, and more specifically FEP, PTFE, ETFE, perfluorosulfonic acid resin, and others, and also, a ratio between the carbonaceous material of the present invention, the water repellent agent, water and the organic solvent, is not particularly limited, and may be adjusted to a property suitable for the impregnating operation.

Here, a surfactant, a resin, and the like may be used as a dispersant, if necessary. As a carbon paper and a carbon fiber body have a large amount of void space, the electroconductivity in the plane direction is high, but the electroconductivity in the thickness direction is low compared to that in the plane direction. So, by filling a carbonaceous material of the present invention in the void space, the objective to stabilize the electroconductivity may also be attained. Also, a method may be used in which a carbonaceous material of the present invention is dispersed in an organic solvent or an aqueous medium (preferably removable by drying, and there are for example, water, alcohol such as ethanol, propyl alcohol; hydrocarbon such as benzene, toluene; acetate, ether, lactone, amine, amide, halogenated alkyl), then blended with a binder resin, and is impregnated to a porous material. By such a method, it is comparatively easy to finely disperse a carbonaceous material to a binder resin.

As a water repellent material of the present invention having both an electroconductivity and water repellency, may exhibit water repellency even when used alone, it is not necessary to add a water repellent agent separately in addition, and a water repellent carbonaceous material of the present invention and a binder resin having no water repellency, may be mixed together in water or an organic solvent, in any ratio, and may be impregnated to a porous material such as a carbon paper, carbon fiber body, and the like, to obtain a gas diffusion layer of a fuel cell. Therefore, a water repellent carbonaceous material of the present invention is preferable to be used as a dispersion. Suitable examples of surfactants to be used to disperse, are for instance, nonionic surfactants as follows: polyoxyethylene alkyl ether, polyoxyalkylene alkylether, polyoxyethylene derivatives, oxyethylene-oxypropylene block copolymer, sorbitan esters of fatty acids, polyoxyethylene sorbitan fatty acid esters, polyoxyethylene sorbitol fatty acid esters, glycerol esters of fatty acids, polyoxyethylene fatty acid esters, polyoxyethylene alkylamine, alkylalkanode amide, nonyl phenol, alkylnonyl phenol, polyoxyalkyleneglycol, alkylamine oxide, acetylenediol, polyoxyethylene nonyl phenyl ether, silicon type surfactants such as polyoxyethylene alkyl phenyl ether modified silicone, fluorochemical surfactants in which hydrocarbon type surfactants have at least one hydrogen atome at the hydrophobic group substituted with fluorine atom. These nonionic surfactants may exhibit higher effect by using simultaneously with other dispersants.

Or else, cationic surfactants such as alkyl trimethyl ammonium salts, for example lauryl trimethyl ammonium bromide, cetyl trimethylammonium bromide, stearyl trimethylammonium chloride, or, alkyl dimethyl benzyl ammonium salts, for example stearyl dimethyl benzyl ammonium chloride, benzalconium chloride, lauryl dimethyl benzyl ammonium chloride salts, amine phosphate salts, may be used.

Or else, anionic surfactants such as fatty acid salts, alkylsulfate salts, alkyl ether sulfate salts, alkyl benzene sulfate salts, alkyl naphthalene sulfate salts, alkyl sulfosuccinate salts, alkyl diphenyl ether disulfate salts, alkyl phosphate salts, polyoxyethyl alkyl sulfate ester salts, polyoxyethyl alkyl aryl sulfate ester salts, alpha olefin sulfate salts, methyl taurine acid salts, ether carboxylic acid salts, naphthalene sulfonates and formaldehyde polycondensation, polyoxyethylene alkyl phosphate, may be used. One or more of these may be used in combination.

An anionic surfactant used here, or an anionic resin among the above described polymer dispersant, may be used as neutralized by ammonium or amine type neutralizing agent. As such a neutralizing agent, for example, diethylamine(DEA), triethylamine(TEA), monoethanolamine(META), diethanolamine(DETA), triethanolamine(TETA), dimethylethanolamine(DMEA), diethylethanolamine(DEEA), isopropylethanolamine(IPEA), diisopropanolamine(DIPA), 2-amino-2-methylpropanol(AMP), 2-(dimethylamino)-2-methylpropanol(DMAMP), morpholine(MOR), N-methylmorpholine(NMM), N-methylmorpholine(NEM), and the like.

One or 2 more in combination of these may be used.

Or else, an amphoteric surfactant such as alanine type, imidazolium betaine type, amide propyl betaine type, amide dipropionic acid salts type, may be used.

When a surfactant is used to disperse in an aqueous system, it may inhibit water repellency. Therefore, when a surfactant is used, it is considered to be preferable to use one that can be removed by heating process in the manufacture of a fuel cell. This is because if the amount of a surfactant left is small, the coating film obtained by applying the dispersion exhibits improved water repellency, and further, the inhibition to the fuel reaction by a dispersant can be prevented. By using such a surfactant with excellent degradability, water repellency can be obtained by applying to a carbon paper or the like, and drying at 300°C for 1 hour to from 340°C to less than 400°C at 30 minutes,.

As a binder resin, one usable as a water repellent agent may be used, and others such as publicly known binders with strong adherability such as acrylic type, urethane type, epoxy type, polyesther type may also be used, and with the latter, a small amount is enough, so it is possible to adhere firmly to a porous material, therefore it is possible to increase the filling factor of the carbonaceous material as a conductive material.

In such case too, a surfactant, a resin or the like may be used as a dispersant, and the object of stabilize the electric conductivity can be achieved by filling a water repellent carbonaceous material of the present invention in the void space of a porous material such as a carbon paper, carbon fiber body, or the like.

To water repellent material of the present invention, a catalyst material such as platinum, Ruthenium, and the like, may be carried on the water repellent carbonaceous material of the present invention, and used as a water repellent catalyst. To the water repellent carbonaceous material of the present invention whereon a catalyst material such as platinum or the like is carried, a binder resin, water or an organic solvent are blended in any ratio, and are impregnated and applied to a porous material such as carbon paper, carbon fiber body, or the like, to obtain a catalyst layer of a fuel cell. If necessary, a surfactant, a resin or the like may be added as a dispersant. A water repellent carbonaceous material of the present invention, because it exhibits water repellent effect even alone, hence, as a binder, not only those with water repellency but also those known in the art such as acrylic type ones, may be used.

Using a water repellent carbonaceous material of the present invention, for example by a method such that is described in Japanese patent application Kokai(laid-open) no.2000-239488, by blending with a thermosetting resin and molding, a separator for fuel cell, having water repellent property, may obtained. Furthermore, by using a binder resin to make into a coating material, it may be utilized as a coating material for a separator.

### Examples

The present invention is further illustrated by the following examples of the invention. The terms "part" and "%" are based on weight unless otherwise specified. Also, carbon black mean particle size is measured by ASTM D-3849 "standard testing method of carbon black primary agglomerate size according to the electron microscope image analysis". Specific surface area is measured by nitrogen adsorption method, DBP oil adsorption amount is measured by JIS K 6221(1982).

### Example 1

80 parts of commercially available carbon black A(mean particle size:30nm, specific surface area:254m²/g, DBP oil adsorption:174ml/100g) and 20 parts of PTFE(commercially available powder, brand name: "Lublon L2") were mixed, and this mixed powder was mixed in a mixer for 5 minutes, then 300 parts of ethanol was added thereto and stirred in a dissolver for 1 to 2 hours. This mixture liquid was put in a crucible and was heated in an electric furnace up to 360°C and held for 1 hour. After being cooled, it was milled for 5 minutes by means of a mixer, and was subjected as a water repellent treated carbon black to the evaluation test to be hereinafter described.

### Example 2

The same treatment was conducted as that of the Example 1 except that the heating temperature was 400°C instead of 360°C.

### Example 3

75 parts of a commercially available carbon black B (mean particle size:18nm, specific surface area:216m²/g, DBP oil adsorption:175ml/100g) and 20 parts of PTFE(commercially available powder, brand name: "Lublon L2") were mixed, and this mixed powder was mixed in a mixer for 5 minutes, then 300 parts of ethanol was added thereto and was stirred in a dissolver for 1 to 2 hours. This mixture liquid was put in a crucible and heated in an electric furnace up to 360°C and held for 1 hour. After being cooled, it was pulverized for 5 minutes by means of a mixer, and was subjected as a water repellent treated carbon black to the evaluation test to be hereinafter described.

### Example 4

The same treatment was conducted as that of the Example 3 except that the heating temperature was 400°C instead of 360°C.

### Example 5

20 parts of a commercially available carbon black B (mean particle size:18nm, specific surface area:216m²/g, DBP oil adsorption:175ml/100g), 74 parts of ion exchanged water, and 6 parts of a commercially available dispersant C (a dispersant with heat residual obtained by 360°C under air atmosphere for 1 hour is at most 1%) were mixed, and were stirred for 1 hour, then were mixed by means of a dyno-mill. Then, to 90 parts of carbon black in the dispersion, 20 parts of PTFE(commercially available powder, brand name: "Lublon L2") were mixed, and this mixed powder was mixed in a mixer for 5 minutes, then the same amount as the dispersant C of ethanol was added thereto, then was mixed by means of a stirrer. After the mixing, the mixture liquid was kept at 100°C for 1 hour and ethanol was evaporated, and then it was heated up to 360°C in an electric furnace and was kept for 1 hour. After being cooled, it was pulverized for 5 minutes by means of a mixer, and was subjected as a water repellent treated carbon black to the evaluation test to be hereinafter described.

### Example 6

75 parts of a commercially available carbon black C (mean particle size:18nm, specific surface area:216m²/g, DBP oil adsorption:175ml/100g) as a carbonaceous material, and 20 parts of PTFE (commercially available powder, brand name:"Lublon L2") were mixed, and this mixed powder was mixed in a mixer for 5 minutes, then 300 parts of ethanol was added thereto and was stirred in a dissolver for 1 to 2 hours. This mixture liquid was put in a crucible and was heated in an electric furnace up to 360°C and was held for 1 hour. After being cooled, it was pulverized for 5 minutes by means of a mixer, and was subjected as a water repellent treated carbon black to the evaluation test to be hereinafter described.

### Example 7

The same treatment was conducted as that of the Example 6 except that the heating temperature was 400°C instead of 360°C.

### [Evaluation test]

### (Water repellency test)

0.1g of water repellent treated carbon blacks obtained in Examples 1 to 7 and 10g of ion exchanged water were put in a sample bottle and were put a lid on. The water repellent property was checked by visually observing the state after being shaken violently by hand.

### <Standard of water repellency>

1st level: flotage condition of the sample: one in which all is floating is considered as having high water repellency.
2nd level: turbidity of the liquid: one without turbidity is considered as hiving high water repellency.

According to these two points, water repellent property is evaluated by ⓞ○Δ×. The results are shown on Table-1.

**Table-1**

| | floating state | turbidity of liquid | water repellency evaluation |
|---|---|---|---|
| Example 1 | all floating | no | ⓞ |
| Example 2 | all floating | no | ⓞ |
| Example 3 | all floating | no | ⓞ |
| Example 4 | all floating | no | ⓞ |
| Example 5 | all floating | no | ⓞ |
| Example 6 | all floating | no | ⓞ |
| Example 7 | all floating | no | ⓞ |
| non-treated Carbon A | all settled | yes | × |
| non-treated Carbon B | all settled | yes | × |
| non-treated Carbon C | all settled | yes | × |

### [Water repellency durability test]

0.1g of water repellent carbon black obtained by Examples 1 to 5 and 10g of ion exchanged water were put in a sample bottle and were put a lid on. After being kept as 70°C for 2 months, the state after being shaken violently by hands were observed visually, and the water repellency was evaluated according to the above described <Standard of water repellent property>. The results are shown in Table-2.

**Table-2**

| | floating state | turbidity of liquid | water repellency evaluation |
|---|---|---|---|
| Example 1 | all floating | no | ⓞ |
| Example 2 | all floating | no | ⓞ |
| Example 3 | all floating | no | ⓞ |
| Example 4 | all floating | no | ⓞ |
| Example 5 | all floating | no | ⓞ |
| Example 6 | all floating | no | ⓞ |
| Example 7 | all floating | no | ⓞ |

By these results, it is understood that any of the water repellent carbon of the Example 1 to 7 maintained water repellent property after duration of time.

### [Acid resistance test]

0.1g of water repellent carbon black obtained by Example 1 to 5 were put in a sample bottle with 10g of pH2 nitric acid and were put a lid on. Then it was let stand for 2 months. The state after being shaken violently by hands the state was observed visually, and the water repellency was evaluated according to the above described <Standard of water repellent property>. The results are shown in Table-3.

**Table-3**

| | floating state | turbidity of liquid | water repellency evaluation |
|---|---|---|---|
| Example 1 | all floating | no | ⓞ |
| Example 2 | all floating | no | ⓞ |
| Example 3 | all floating | no | ⓞ |
| Example 4 | all floating | no | ⓞ |
| Example 5 | all floating | no | ⓞ |
| Example 6 | partly settled | yes | × |
| Example 7 | partly settled | yes | × |

The result shows that especially the water repellent carbon black obtained by the water repellent treatment 1 in Example 1 to 5 was excellent in acid resistance.

### [Heat resistance test]

To check the heat resistance, the water repellent carbon black obtained by Example 1 to 5 were heated in an electric furnace at 400°C for 1 hour and then was stood to cool. 0.1g of the water repellent carbon black after being cooled were put with 10g of ion exchanged water in a sample bottle and was put a lid on. The state after being shaken violently by hand was visually observed and the water repellency was evaluated according to the above described <Standard of water repellent property>. The results are shown in Table-4.

**Table-4**

| | floating state | turbidity of liquid | water repellency evaluation |
|---|---|---|---|
| Example 1 | all floating | no | ⓞ |
| Example 2 | all floating | no | ⓞ |
| Example 3 | all floating | no | ⓞ |
| Example 4 | all floating | no | ⓞ |
| Example 5 | all floating | no | ⓞ |
| Example 6 | partly settled | yes | × |
| Example 7 | partly settled | yes | × |

These results show that especially the water repellent carbon black obtained by the water repellent treatment 1 in Example 1 to 5 are excellent in acid resistance.

### [Powder resistance]

For the following samples, powder resistance was measured by means of "Loresta-GP" (by Dia Instruments KK) , using 4 probes. The load was 12kN and the amount of sample was 1g. The results are shown in Table-5.

**Table-5**

| Sample | Volume resistance ratio (Ω · cm) |
|---|---|
| non-treated carbon black A | 3. 0 × 10⁻² |
| water repellent finished carbon black of Ex.1 | 4. 5 × 10⁻² |
| non-treated carbon black B | 5. 6 × 10⁻² |
| water repellent finished carbon black of Ex.3 | 8. 0 × 10⁻² |
| non-treated carbon black C | 4. 1 × 10⁻² |
| water repellent finished carbon black of Ex.6 | 4. 9 × 10⁻² |
| water repellent finished carbon black of Ex.7 | 5. 1 × 10⁻² |

According to these results, the water repellent carbon black of the present invention, compared to the non treated ones, the increase in resistance is very small and has both electroconductivity and water repellency.

### Example 8

A quartz filter paper having 37mmΦ was impregnated for a few seconds in a mixture liquid of 10 parts of the water repellent carbon black obtained in the Example 5 and 90 parts of ion exchanged water. After being taken out, it was heated in an electric furnace at 360°C for 1 hour, then was stood to cool.

### Comparative example 1

A quartz filter paper having 37mmΦ was impregnated for a few seconds in a mixture liquid of 9 parts of carbon black B(mean particle size:18nm, specific surface area:216m²/g, DBP oil adsorption:175ml/100g), 1 part of PTFE(commercially available powder, brand name: "Lublon L2") and 90 parts of ion exchanged water. After being taken out, it was heated in an electric furnace at 360°C for 1 hour, then was stood to cool.

### Comparative example 2

A quartz filter paper having 37mmΦ was impregnated for a few seconds in a mixture liquid of 6.7 parts of carbon black B(mean particle size:18nm, specific surface area:216m²/g, DBP oil adsorption:175ml/100g), 3.3 parts of PTFE(commercially available powder, brand name:"Lublon L2") and 90 parts of ion exchanged water. After being taken out, it was heated in an electric furnace at 360°C for 1 hour, then was stood to cool.

### [Water repellent property test]

Water repellency was checked by dropping water droplet on the quartz filter paper treated in Example 8 and Comparative Example 1 and 2.

### <Standard of water repellency>

Those which flip water droplet are considered to have high water repellency. Those in which water droplets interpenetrate are considered to have low water repellency.

### [electrical conductivity test]

Quartz filter papers obtained by Example 8 and Comparative example 1 and 2 were put between gold coated plates above and below. By means of a direct-current power source, electrical current of 1A were passed, and by measuring the electric pressure by means of a tester, the electrical resistance was determined. The result is shown in Table-6.

**Table-6**

| | water repellency test | electroconductivity |
|---|---|---|
| Example 8 | ⓞ | 0.3Ω |
| Comparative Ex. 1 | Δ | 0.35Ω |
| Comparative Ex.2 | ⓞ | 0.52Ω |

According the this result, it is confirmed that the water repellent carbonaceous material of the present invention obtains enough water repellent effect with a small amount of water repellent material, and that its electroconductivity is also high enough.

### Industrial Applicability

A water repellent carbonaceous material of the present invention, doesn't loose easily its water repellency when heated, and it can keep high water repellency. Also, wide range of options of water repellent materials may be used, and by using a material having high water repellent effect in small amount, high water repellency and high electroconductivity may be obtained simultaneously.

Furthermore, a water repellent carbonaceous material of the present invention has a heat resistance of 400°C 1 hour, and it is understood that water repellency is kept at the gas diffusion layer molding process.

A water repellent carbonaceous material of the present invention having both electroconductivity and water repellency when utilized in a gas diffusion layer of a fuel cell, the amount of water repellent agent used as binder and water repellent in one may be drastically reduced. Therefore, electrical resistance of the gas diffusion layer may largely drop, therefore the cell performance is expected to be improved.

Also, by supporting catalyst materials like platinum to the water repellent carbonaceous material of the present invention having both electroconductivity and water repellency, the amount of the water repellent agent used as binder and water repellent in one may be drastically reduced. Therefore, the electrical resistance may drastically drop, and the cell performance is expected to improve.

## Claims

1. A water repellent carbonaceous material obtained by contacting a carbonaceous material with a water repellent material in a melted state.

2. A method for producing a water repellent carbonaceous material **characterized in that** a water repellent material in a melted state is contacted with a carbonaceous material.

3. A carbonaceous material for a fuel cell obtained by dropping a water repellent material solved in an organic solvent to a water dispersion of a carbonaceous material.

4. A method for producing a water repellent carbonaceous material **characterized in that** water repellent finish is conducted by dropping a water repellent material solved in an organic solvent to a water dispersion of a carbonaceous material.

5. A carbonaceous material for fuel cell according to claim 1 or 3, **characterized in that** the said carbonaceous material is at least one of carbon black, graphite and carbon fiber.

6. A carbonaceous material for fuel cell according to claim 1 or 3 **characterized in that** the said water repellent material is at least one of fluorocarbon resin, silicon resin, silane coupling agent and wax.

7. A dispersion containing a water repellent carbonaceous material of claim 1 to 6.

8. A material for fuel cell obtained by supporting catalyst component on the water repellent carbonaceous material of the claim 1 to 6.

9. An electrode for fuel cell containing a material for fuel cell of claim 8.

10. A gas diffusion layer for fuel cell obtained by blending the water repellent carbonaceous material of claim 1 to 6 with a binder resin and impregnating it to a porous material.

11. A separator for fuel cell obtained by blending the water repellent carbonaceous material of claim 1 to 6 with a binder resin, and shaping it.

12. A method for producing a gas diffusion layer for fuel cell **characterized in that** the dispersion according to claim 7 is blended with a binder resin, and impregnated to a porous material.

13. A separator for fuel cell **characterized in that** the dispersion according to claim 7 is blended with a thermosetting resin and is shaped.
